# EUROPEAN PATENT APPLICATION

(11) **EP 2 805 898 A2**
(43) Date of publication of application: **26.11.2014**
(21) Application number: 14168528.9
(22) Date of filing: 15.05.2014
(51) Int. Cl.: B65D 75/50, B65D 5/02

(54) **A method of packaging a product and means for carrying out the method**

(30) Priority: 15.05.2013 GB 201308743
(71) Applicant: Birds Eye IPCO Limited, Feltham, Middlesex TW14 8HA (GB)
(72) Inventor: Willey, Jason Denis, Barry CF63 1RG (GB); Martinez, Radka Ivanova, Windsor SL4 3EL (GB)
(74) Representative: Finnie, Peter John

(57) **Abstract**

A method of producing a package comprising: forming a hollow body having at least one vertex from sheet material; forming at least one join 413a, 413b by attaching together edges of the sheet material, the at least one join adjacent to the at least one vertex; and attaching the sheet material together in a region 415a adjacent the join and the vertex to form a grasping area; said forming the join and said attaching being carried out in a single operation by applying heat, applying pressure, or applying both heat and pressure, to the sheet material using seal jaws.

## Description

### Technical Field

The present invention relates to a method of packaging a food product, and apparatus for carrying out the method.

### Background

It is known to package food products in a sealed package shaped into a geometrically regular shape, e.g. a tetrahedron. Some examples of such a food product include rice, pasta in sauce, and vegetables in sauce. Typically, such packaged products are supplied to the customer and stored frozen, chilled or at room temperature.

When the customer wishes to serve the food product the entire package can be placed in a microwave or conventional oven and cooked. The package can then be opened and the cooked food product can be served. In some examples the packaging may be unsealed before cooking the food product, but in other examples the food product may be cooked without unsealing the packaging.

This type of packaging has a number of advantages of convenience, ease of use and minimising mess.

In practice, it has been found that a problem of this type of packaging is that the exterior of the package can become uncomfortably hot after cooking, which can cause problems for users in handling the package and serving the cooked food product.

### Summary

According to a first aspect there is provided a method of producing a package comprising: forming a hollow body having at least one vertex from sheet material; forming at least one join by attaching together edges of the sheet material, the at least one join being adjacent to the at least one vertex; and attaching the sheet material together in a region adjacent the join and the at least one vertex to form a grasping area; said forming the at least one join and said attaching to form the grasping area being carried out in a single operation by applying heat, applying pressure, or applying both heat and pressure to the sheet material using seal jaws.

The hollow body could have two vertices adjacent the join. The sheet material could be attached together in two regions, each of said regions being adjacent to the join and a respective one of the vertices, to form two grasping areas.

The hollow body could have a plurality of vertices, each vertex being adjacent to at least one of the at least one joins. The sheet material could be attached together in a plurality of regions, each of said plurality of regions being adjacent to one of the at least one joins and a respective one of the plurality of vertices, to form a plurality of grasping areas. The sheet material could optionally be attached together to form a grasping area adjacent each vertex of the hollow body.

The hollow body could be formed from a single sheet of sheet material.

The hollow body could comprises a convex polyhedron, the convex polyhedron optionally being a pyramid, the pyramid optionally being a tetrahedron.

The method could be performed by a vertical form fill sealing machine.

According to a second aspect there is provided a package produced according to the method of the first aspect.

According to a third aspect there is provided a pair of seal jaws adapted to attach together sheet material placed between the pair of seal jaws, and comprising: a first seal jaw and a second seal jaw; each of the first and second seal jaws comprising: at least one flat sealing area having an edge; and at least one attachment area extending outwardly from the edge of the sealing area; and the first and second seal jaws being arranged so that the at least one flat sealing areas of the first and second seal jaws are opposed and the at least one attachment areas of the first and second seal jaws are opposed; the seal jaws being arranged such that, when the opposed at least one flat sealing areas of the first and second seal jaws attach together edges of sheet material to form a join, the opposed at least one attachment areas of the first and second seal jaws attach the sheet material together in a region adjacent the join to form a grasping area.

The at least one attachment area could be located at a respective end of the edge.

Each of the first and second seal jaws could comprise first and second spaced apart attachment areas each extending outwardly from the edge of the at least one sealing area. The first and second seal jaws could be arranged so that the respective first and second attachment areas of the first and second seal jaws are opposed. The seal jaws could be arranged such that, when the opposed at least one flat sealing areas of the first and second seal jaws attach together edges of sheet material to form a join, the opposed first and second attachment areas of the first and second seal jaws seal spaced apart regions adjacent the join to form grasping areas.

The first and second seal jaws could each comprise first and second jaw elements. Each of the first and second elements of the first and second seal jaws could comprise: a flat sealing area having an edge; and at least one attachment area extending outwardly from the edge of said sealing area. The first and second seal jaws could be arranged so that: the at least one flat sealing areas of the first elements of the first and second seal jaws are opposed, the at least one flat sealing areas of the second elements of the first and second seal jaws are opposed, the at least one attachment areas of the first elements of the first and second seal jaws are opposed, and the at least one attachment areas of the second elements of the first and second seal jaws are opposed. The seal jaws could be arranged such that: when the opposed at least one flat sealing areas of the first elements of the first and second seal jaws attach together edges of sheet material to form a first join, the opposed at least one flat sealing areas of the second elements of the first and second seal jaws attach together edges of sheet material to form a second join, the opposed at least one attachment areas of the first elements of the first and second seal jaws attach the sheet material together in a region adjacent the first join to form a first grasping area, and the opposed at least one attachment areas of the second elements of the first and second seal jaws attach the sheet material together in a region adjacent the second join to form a second grasping area. The seal jaws could further comprise: a blade having a sharp edge, said blade being arranged to, in use, move between a position intermediate the first and second elements of the first seal jaw and a position intermediate the first and second elements of the second seal jaw during or after formation of the first and second joins such that the sheet material is cut between the first and second joins.

The attachment areas could comprise protrusions and/or recesses for forming grip-enhancing structures such as ridges or bumps in the region adjacent the join.

According to a fourth aspect there is provided a vertical form filling sealing machine comprising the seal jaws of the third aspect.

According to a fifth aspect there is provided a method of producing a package according to the first aspect, using the seal jaws of the third aspect or the vertical form filling sealing machine of the fourth aspect.

According to a sixth aspect there is provided the package of the second aspect, formed using the seal jaws of the third aspect or the vertical form filling sealing machine of the fourth aspect.

### Brief Description of the Drawings

An embodiment of the present invention will now be described, by way of example only, with reference to the accompanying drawings, in which:
Figure 1 is a perspective view of a food package;
Figure 2 is an explanatory diagram of a food package;
Figures 3A, 3B and 4 are views of parts of a production machine usable to produce the food package of Figure 2;
Figure 5 is an explanatory diagram of a food package;
Figures 6A and 6B are views of parts of a production machine usable to produce the food package of Figure 5;
Figure 7 is an explanatory diagram of a food package;
Figures 8A and 8B are views of parts of a production machine usable to produce the food package of Figure 7;
Figure 9 is an explanatory diagram of a food package;
Figures 10A and 10B are views of parts of a production machine usable to produce the food package of Figure 9;
Figure 11 is an explanatory diagram of a food package;
Figures 12A and 12B are views of parts of a production machine usable to produce the food package of Figure 11.

### Detailed Description

In the following, the invention will be described, by way of example only, as applied to packaging and cooking a food product. In the context of this application, cooking is to be understood as heating of the food product and not as requiring or implying any change in the food product beyond an increase in temperature.

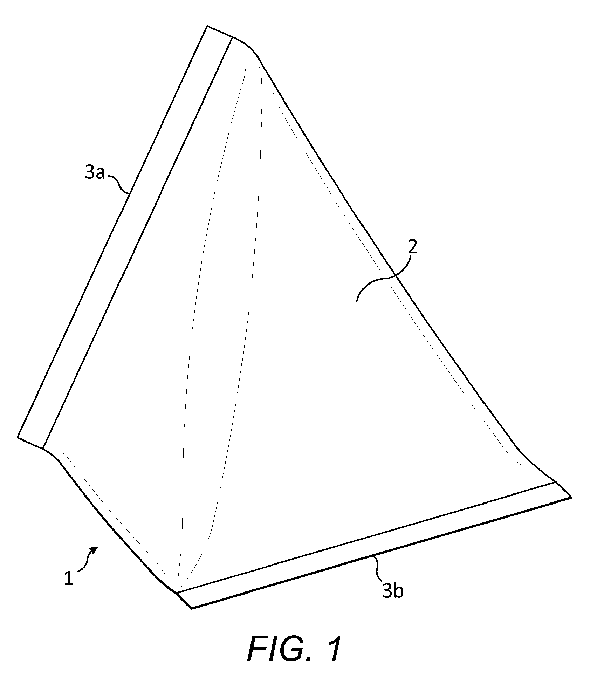

Figure 1 shows an example of a food package 1. The food package 1 has the form of a sealed hollow tetrahedral body and, in use, is partially filled with a food product. The hollow tetrahedral body of the food package 1 is formed from a sheet 2 of material folded into a tetrahedral shape and sealed together at sealed joins 3a and 3b.

Accordingly, in the illustrated example of Figure 1 the hollow tetrahedral food package 1 has four faces, four vertices and six edges, with two of the edges being formed by joins 3a and 3b, and four of the edges being formed by folds in the sheet 2.

In one example, as an overview of use of the food package 1, the food package 1 is supplied sealed. When a user wishes to consume the food product the food package 1 is placed in an oven, such as a conventional or microwave oven, and heated for a desired time to cook the food product. The food package 1 may be unsealed before heating, for example to permit release of steam and avoid rupture of the package due to increased pressure within it. When the food product has been cooked the food package 1 is removed from the oven and the cooked food product served by opening the food package 1 and decanting the cooked food product onto a suitable receptacle, such as a bowl or plate. The food package 1 may for example be opened by cutting or tearing the sheet 2, or by tearing open one of the sealed flanges 3a or 3b.

In use, it has been found that some users complain that food packages of this type are too hot, or uncomfortably hot, after cooking so that these users have problems with manually handling the food packages.

It has been realised by the inventors that, in practice, users tend to manually pick up food packages of this type by grasping the upper vertex of the food package. However, during cooking, as the food product within the food package is heated, hot gas and vapour will tend to collect within the food package 1 in the region of the upper vertex. In addition to the tendency of all of the space above the food product tending to heat up and to fill with hot vapour released by the food product as it cooks, the region adjacent the upper vertex is the highest point in the interior of the food package 1 so that the hottest gas and vapour tends to accumulate there as a result of convection. Accordingly, the upper vertex of the food package 1 may become hot during cooking so that a user attempting to manually handle the food package 1 by grasping the upper vertex may find the grasped part of the food package 1 uncomfortably hot, and the user may even be burned.

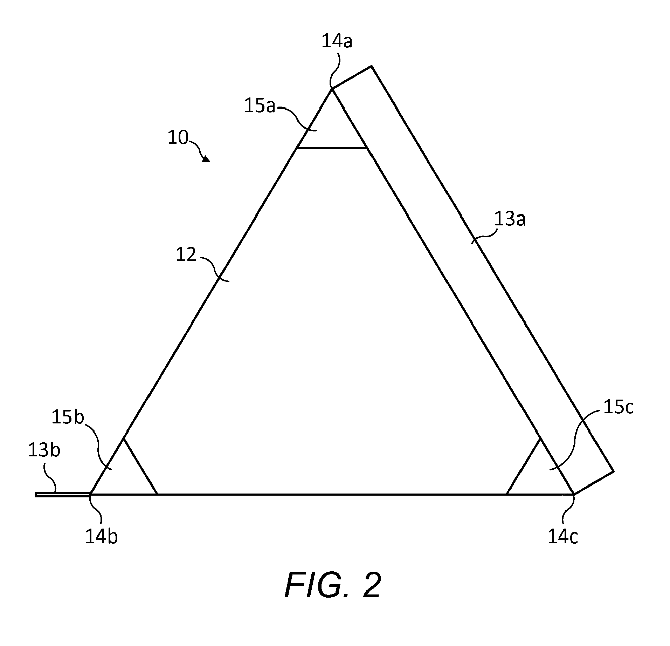

Figure 2 shows an example of an improved food package 10. The food package 10 is generally similar in appearance to the food package 1, comprising a hollow substantially tetrahedral body which, in use, is partially filled with a food product. In the illustrated example the food package 10 is supplied frozen, that is, with the contained food product frozen, and is intended to be cooked from frozen while sealed, before being opened and the food product served. In other examples the food package 10 may not be frozen, that is the contained food product may not be frozen. In some examples the food package 10 may be chilled or may be at ambient temperature. In some examples the food package 10 may be intended to be unsealed before cooking.

The hollow tetrahedral body of the food package 10 is formed from a sheet 12 of material folded into a tetrahedral shape and sealed together at sealed seams or joins 13a and 13b. Similarly to the example of figure 1, each of the sealed joins 13a and 13b forms one of the edges of the hollow tetrahedral food package 10.

The food package 10 is referred to as substantially tetrahedral because it comprises a tetrahedral main hollow body, and also the seam or joins 13a and 13b, which are additional to the tetrahedral shape. The figures are not necessarily to scale. The seams 13a and 13b can be made as thin as possible whilst maintaining their sealing function in order to maximize the internal volume obtainable from a given sheet size. The tetrahedral food package 10 has four vertices 14a to 14d (only three vertices 14a to 14c are visible in Figure 2).

At one, some or each of the vertices 14a to 14d of the food package 10 a respective small sealed region 15a to 15d of the sheet 12 is sealed to itself, that is, in one, some or all of these small sealed regions 15a to 15d the inner surfaces of parts of the sheet 12 forming different faces of the tetrahedral food package 10 are sealed together. As will be explained in more detail below, the or each sealed region 15a to 15d forms a holding, grasping, or gripping area.

The sheet 12 is sealed to itself to form a small sealed region 15a to 15d at at least one of the vertices 14a to 14d.

The number, size and shape of sealed regions 15a to 15d may vary in different examples.

In the illustrated example of Figure 2 all four of the vertices 14a to 14d of the food package 10 have a respective small sealed region 15a to 15d of the sheet 12 which is sealed to itself to form a small sealed region 15a to 15d respectively. Thus, in the illustrated example of Figure 2 the hollow tetrahedral food package 10 has four faces, four vertices 14a to 14d, each adjacent to a respective sealed region 15a to 15d, and six edges, two of the edges being formed by joins 13a and 13b, and four of the edges being formed by folds in the sheet 12.

In use, when the food package 10 has been heated to cook the food product a user can pick up the food package 10 by grasping the grasping area formed by the sealed region 15a adjacent to the upper vertex 14a of the food package 10, for example by grasping the sealed region 15a between a finger and thumb. As explained above, in the sealed region 15a the sheet 12 is sealed to itself, so that it is not possible for heated gas and vapour to collect within the sealed region 15a. As a result, the sealed region 15a forms a cold corner zone and the contact temperature and/or heat transfer experienced by a user manually handling the food package 10 by holding this cold corner zone is reduced and kept at acceptable levels.

As is explained above, each of the vertices 14a to 14d of the food package 10 has a respective adjacent sealed region 15a to 15d so that all of the vertices 14 to 14d have an associated cold corner zone. In principle a user could pick up the food package 10 by any cold corner zones. However, in practice it has been found that users are most likely to pick up a food package 10 using the cold corner zone adjacent the upper vertex 14a.

In some applications it may be desirable for a user to shake the food package 10 after cooking, but before opening, for example to provide optimal ingredient and flavour consistency in the served food product, and/or to eliminate hot and cold spots in the cooked food product by mixing. The cold corner zone adjacent the upper vertex 14a of the food package 10 may provide advantages in this situation. If a user grasps a cold corner zone to hold and shake the food package 10, the hot liquid and/or solid food product cannot enter the sealed cold corner zone. Accordingly, uncomfortable heating or burning of the user by the hot food product when shaking the food package 10 is avoided.

The sealed regions 15a to 15d providing the cold corner zones are described as being small. In practice the exact size and shape of the sealed regions 15a to 15d will vary depending on the requirements of different applications. In general it is desirable for the sealed regions 15a to 15d to be large enough to be reliably graspable by users. However, for a given size of food package 10, if the sealed regions 15a to 15d are made larger, the internal volume of the food package 10 will be made smaller. Accordingly, it is also generally desirable for the sealed regions 15a to 15d to not be too large, so that the internal volume of the food package 10 is not undesirably reduced. Accordingly, the size and shape of the sealed regions 15a to 15d may be selected as appropriate in each specific application.

The sheet 12 may be formed of a plastics material, such as oriented polypropylene (OPP) or polyethylene terephthalate (PET), organic fibrous materials, such as paper, or other appropriate flexible materials, for example aluminium foil, or laminates thereof.

The sheet 12 may be sealed to itself to form the joins 13a and 13b and the sealed regions 15a to 15d using any sheet sealing technique. Suitable known sheet sealing techniques include sealing by applying heat, applying pressure, and applying heat and pressure in combination, such as so called heatseal and coldseal techniques.

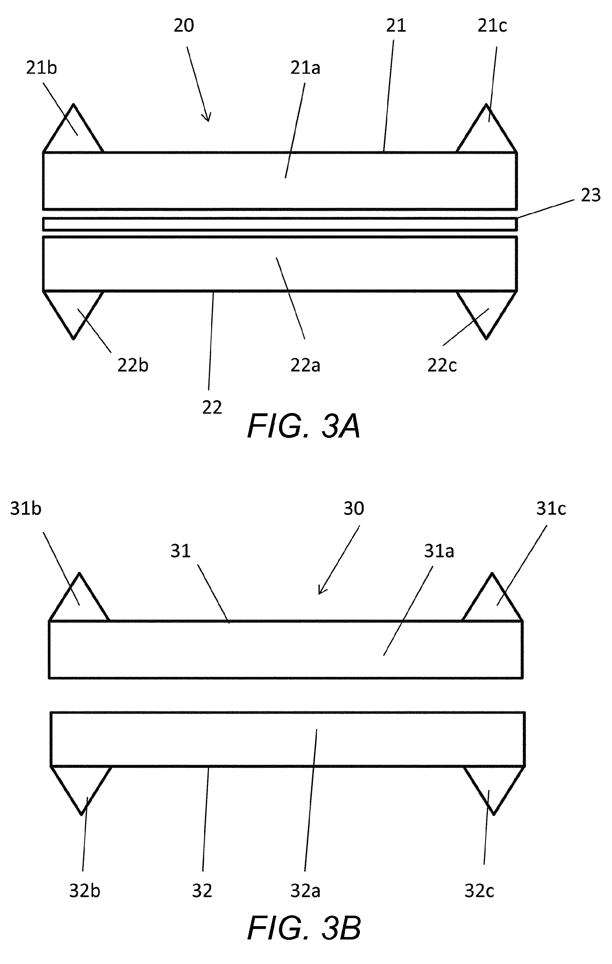

Figures 3A and 3B show a partial view of an example of a production machine useable to produce the food package 10.

An overview of an exemplary fill and seal online production process is that the sheet 12 is first formed into a tube. It will be understood that forming the sheet 12 into a tube will leave a seam. However, for clarity this seam is not shown in the figures. Then, the tube form sheet 12 is cut and a first one of the joins 13a and 13b is sealed. Then, the food product is inserted into the tube, and the tube form sheet is cut and a second one of the joins 13a and 13b is sealed to form the food package 10. The first and second ones of the joins 13a and 13b are formed perpendicular to one another so that the food package 10 is formed in a tetrahedral shape.

In alternative examples, the first and second joins could be formed parallel to one another so that the food package had a rectangular pouch shape.

Only a sealing jaw part of a production machine used to seal the joins 13a and 13b is shown in Figure 3, and not the other parts of the production machinery. The skilled person will be able to provide the other parts of the production machinery without difficulty.

Figure 3 shows a pair of first and second sealing jaws 20 and 30. In operation two layers of the sheet 12 are pressed between the opposed first and second sealing jaws 20 and 30 to form a join.

The first sealing jaw 20, shown in Figure 3A, comprises a first jaw element 21 and a second jaw element 22 with a blade 23 located between them. The second sealing jaw 30, shown in Figure 3B, comprises a first jaw element 31 and a second jaw element 32.

The first jaw element 21 of the first sealing jaw 20 comprises a first rectangular pressing surface 21 a, and the second jaw element 22 comprises a second rectangular pressing surface 22a. Similarly, the first jaw element 31 of the second sealing jaw 30 comprises a first rectangular pressing surface 31a, and the second jaw element 32 comprises a second rectangular pressing surface 32a. In operation, the first and second sealing jaws 20 and 30 are opposed to one another and arranged to be moveable so that the first and second jaw elements 21 and 22 of the first sealing jaw 20 can be moved towards the first and second jaw elements 31 and 32 of the opposed second sealing jaw 30 to compress two layers of the sheet 12 between the first and second rectangular pressing surfaces 21a and 22a of the first and second jaw elements 21 and 22 of the first sealing jaw and the opposing first and second rectangular pressing surfaces 31a and 32a of the first and second jaw elements 31 and 32 of the opposed second sealing jaw 30 to seal the two layers of the sheet 12 together. When the two layers of the sheet 12 are compressed between the first and second sealing jaws 20 and 30 the blade 23 is moved outwardly from the first sealing jaw 20 towards the second sealing jaw 30 so that the blade 23 cuts through both layers of the sheet 12.

The cutting of the tube form sheet 12 by the blade 23 separates successive food packages 10. Thus, the first jaw elements 21 and 31 of the first and second sealing jaws 20 and 30 form a join in one food package 10, and at the same time the second jaw elements 22 and 32 of the first and second sealing jaws 20 and 30 form a join in another food package.

The first jaw element 21 of the first sealing jaw 20 further comprises two triangular projecting/extension elements 21 b and 21 c located at opposite ends of the first jaw element 21, and the first jaw element 31 of the second sealing jaw 30 further comprises two triangular projecting/extesnion elements 31b and 31c located at opposite ends of the first jaw element 31. The triangular projecting elements 21 b, 21 c, 31 b and 31 c are arranged so that when the first and second sealing jaws 20 and 30 move together to compress the folded sheet 12 so that their respective first rectangular pressing surfaces 21a and 31a cooperate to form the sealed join 13a of one food package 10 between them, the projecting elements 21b and 31 c cooperate to form the sealed region 15a between them adjacent a first end of the sealed join 13a, and the projecting elements 21c and 31 b cooperate to form the sealed region 15b between them at a second end of the sealed join 13a opposite the first end. In this way "cold corner" grasping regions are created simultaneously with edge seals in a single operation. Shaping the seal jaws to include stamping parts for attaching the sheet material together at vertices to form grasping regions therefore realises incorporation of cold corners into packages without slowing down the production process since no additional process step is required. This is achieved by strategically placed and shaped extensions to normal sealing jaws or a manufactured area where larger jaws have contact area removed to leave an extended strategically placed and shaped contact area which produces a cold corner in addition and at the same time as producing a seal.

The sealed join 13b and the adjacent sealed regions 15c and 15d of another preceding food package 10 are formed by the projecting elements 22b, 22c, 32b and 32c of the respective second jaw elements 22 and 32 at the same time in a similar manner.

As explained above, the sealed joins 13a and 13b of each food package 10 are formed perpendicularly so that the food package 10 has a tetrahedral shape. In some examples this may be done by having an additional pair of sealing jaws arranged perpendicularly to the pair of sealing jaws described above and arranging for each of the two sealed joins 13a and 13b of each food package 10 to be made by a different one of the pairs of sealing jaws. In other examples this may be done by using only a single pair of sealing jaws and rotating this pair of sealing jaws through a right angle between making the two sealed joins 13a and 13b of a specific food package, the sheet 12 being moved through the jaws by the desired package length during the rotation.

The package can be filled with food, drink or another product between making the first and second seams 13a and 13b.

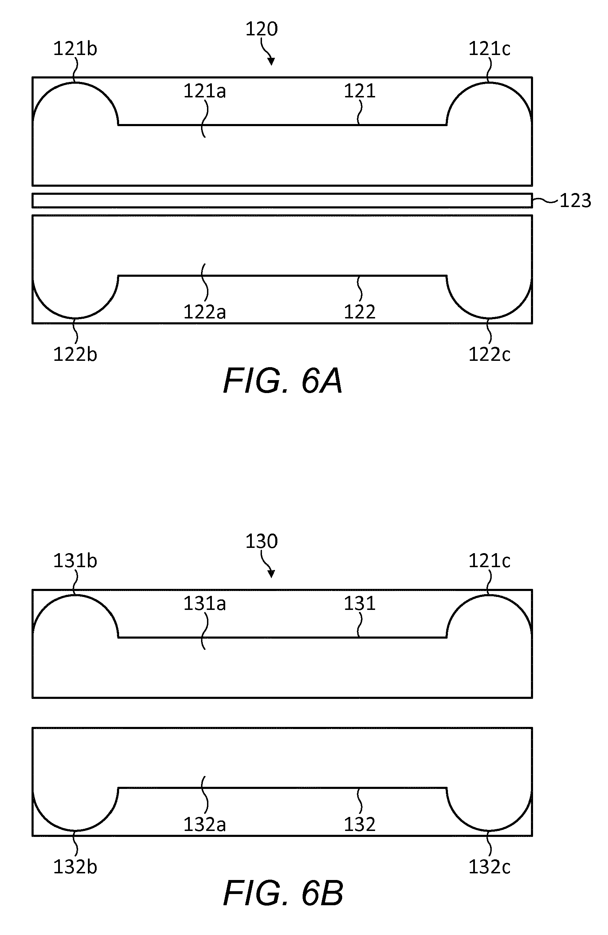

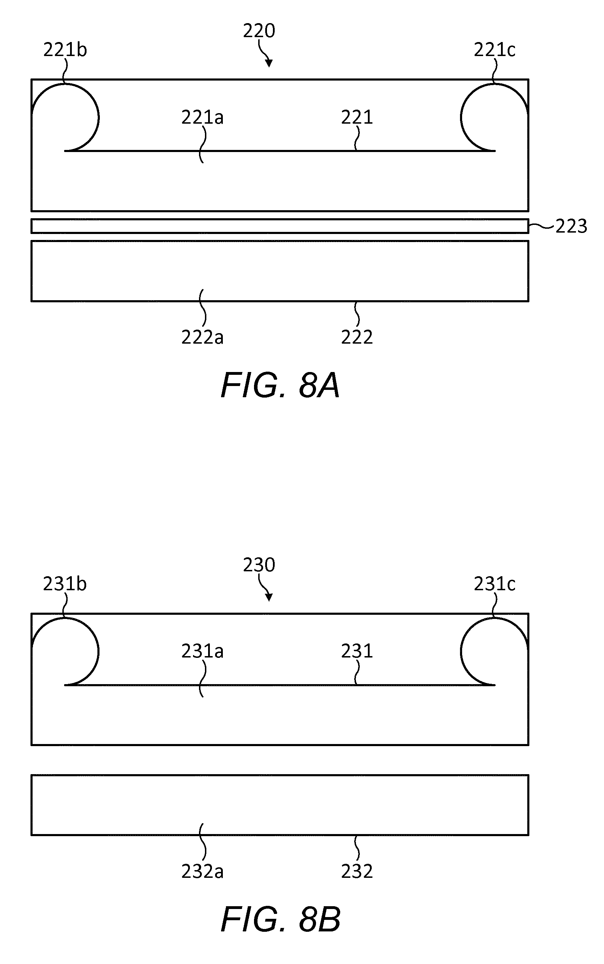

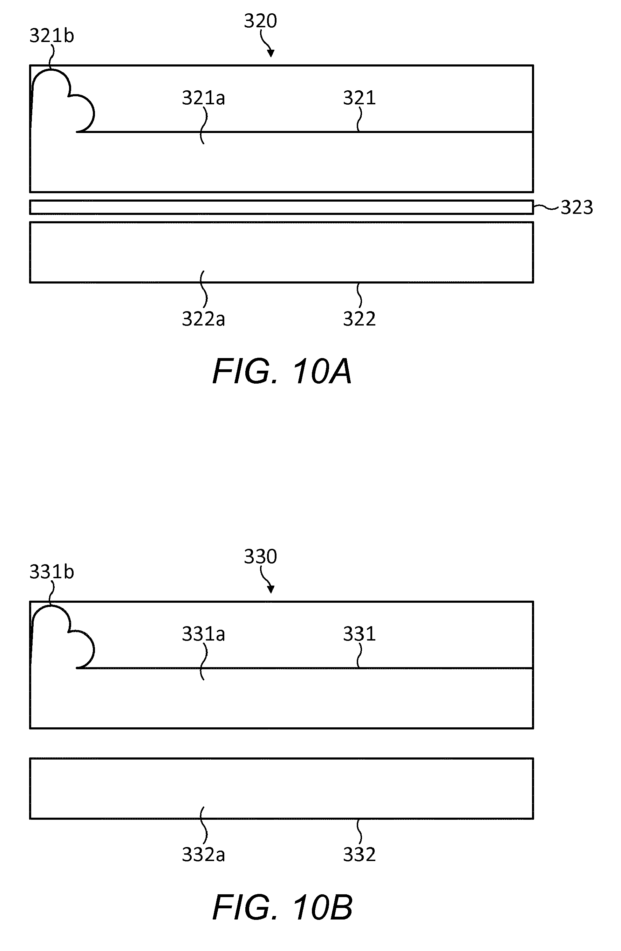

In some examples a jaw element and the connected projecting element or elements are formed as a single unitary body. In some examples a jaw element and the connected projecting element or elements are formed as separate bodies attached together. In some examples, as shown in Figures 6, 8, 10 and 12, the rectangular pressing surfaces and the projecting elements are integrally formed as a stamp face of a larger stamping block. Such a stamping block could be formed in a mould in a single operation, or could be produced by filing or cutting away material from one face of a cuboid block to leave a rectangular pressing surface and one or more projecting elements (flush with one another) raised above a recessed portion of the face.

The illustrated example of Figures 3A and 3B shows a pair of seal jaws for a production machine using a technique where pressure alone is applied to the sheet material to seal it. In other examples combined heat and pressure is applied to seal the sheet material. In such examples the seal jaws, or some other part of the production machine, can be arranged to heat the sheet material during the pressing. Further, in such examples the seal jaws may comprise heaters and heat sensors to allow the temperature of the seal jaws to be controlled.

The illustrated example of Figures 3A and 3B shows a pair of seal jaws having rectangular pressing surfaces. In other examples the pressing surfaces may have a different shape.

The exemplary production process described above is a fill and seal online production process where a first sealed join is formed at the end of the tube to define a pocket or pouch, a food product is placed in the pocket, and a second sealed join is then formed to seal the food package. In other examples an offline process may be used where a first sealed join is formed at the end of the tube to define a pocket or pouch, the pocket or pouch is separated from the tube, and subsequently a food product is placed in the pocket, and a second sealed join is formed to seal the food package.

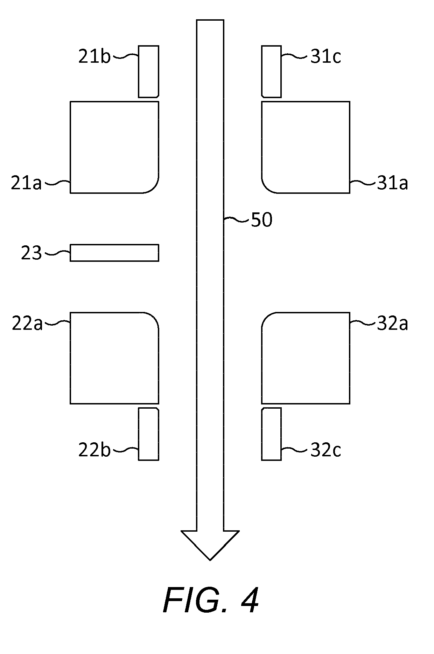

Figure 4 shows an end-on view of sealing jaws 20 and 30 arranged for use. A sheet tube is fed between them in the direction of arrow 50 and, when it reaches the desired height, jaws 20 and 30 move inwardly to sandwich the sheet tube between them. At the same time, or shortly afterwards, blade 23 moves from left to right as shown, i.e. from between the first and second elements 21, 22 of the first sealing jaw 20 to between the first and second elements 31, 32 of the second sealing jaw 30. Blade 23 thereby cuts through the sheet material, separating a now fully formed, filled and sealed lower package from a partially formed upper package which can then be filled, moved down and sealed in turn.

Blade 23 can be a straight-edged blade, or can be serrated such that packages are formed in a single strip, connected by perforated lines which can easily be torn at a later time.

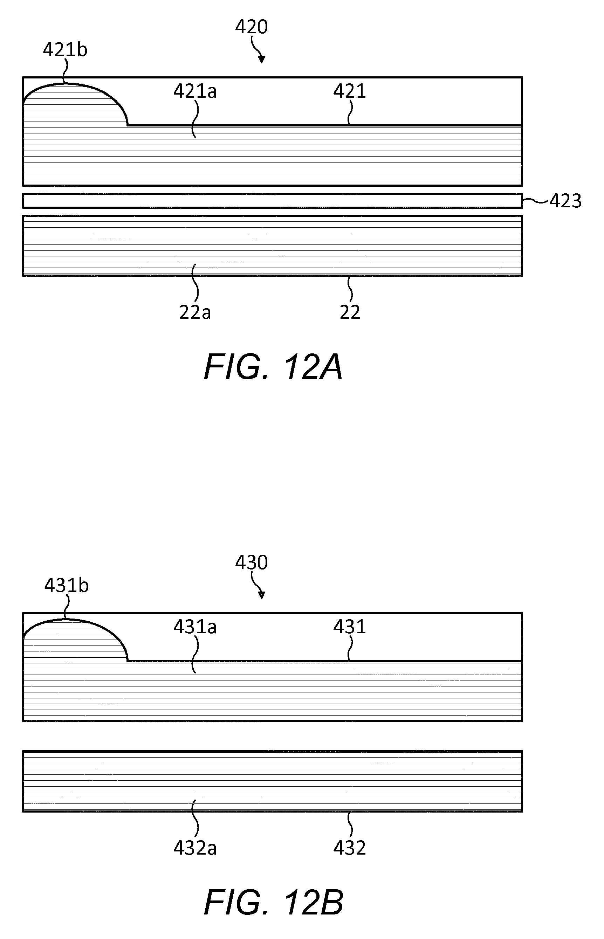

In some examples grip enhancing structures, such as bumps or ridges/ribs, may be formed on the exterior of the food package in the cold corner zones. In addition to providing improved grip such structures may also provide a visual indication of the location and extent of the cold corner zones. In the example shown in Figure 12, the stamping faces of the jaws are profiled to form ridges in both the seal and the grasping area. The ridges in the grasping area improve grip on that area and the ridges on the seam increase the seam's resistance to peeling.

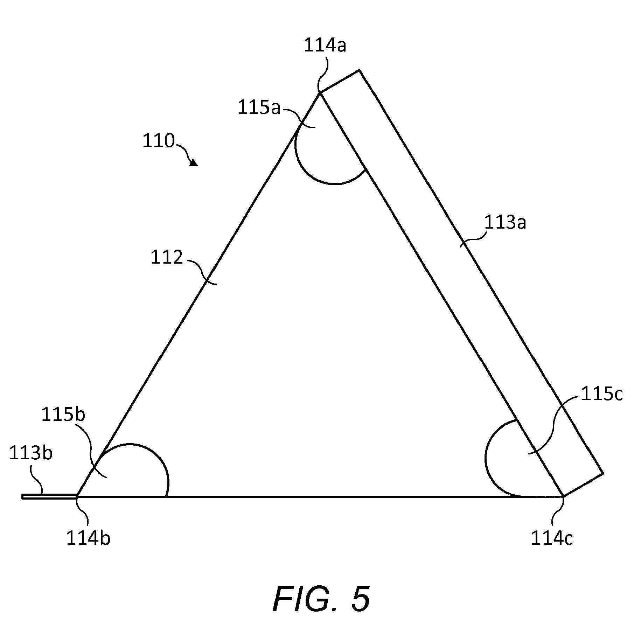

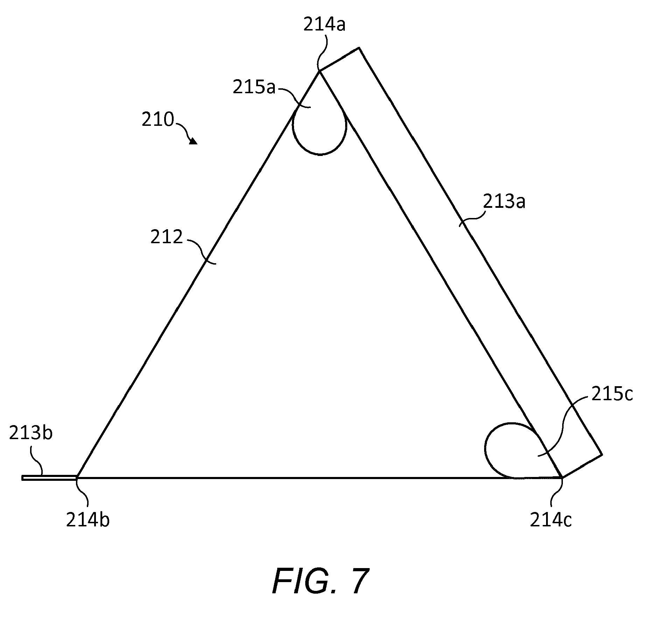

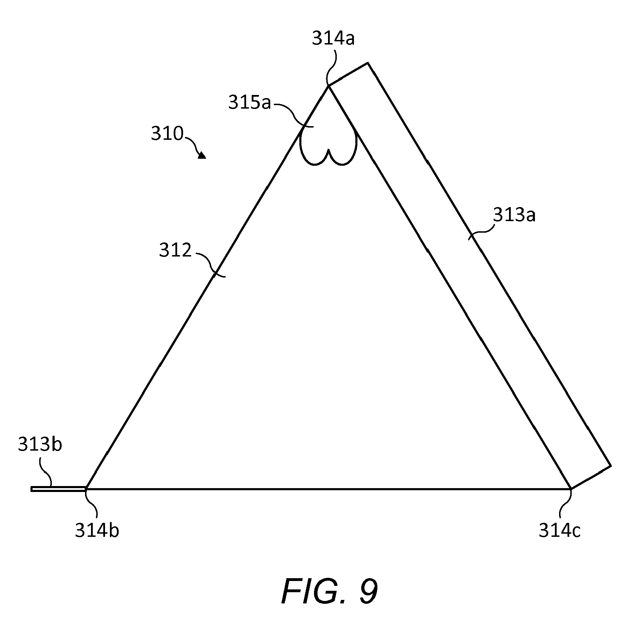

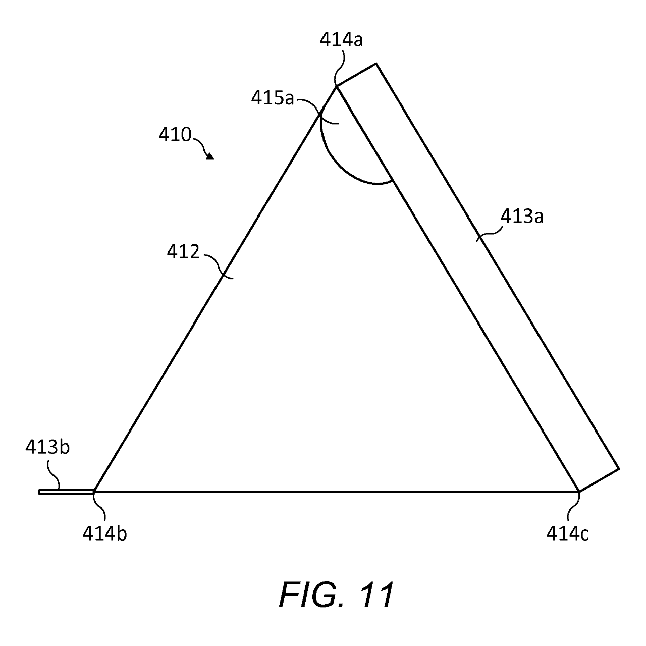

In the illustrated example of Figures 2 to 3 the sealed regions and cold corner zones are triangular. In other examples they may have different shapes. For example, in the example of Figures 5 to 6 they are D-shaped, in the example of Figure 7 to 8 they are in the form of a circle with a squared-off corner, in the example of Figures 9 to 10 they are in the form of a heart shape and in the example of Figures 11 to 12 they are in a curved tab shape.

In the illustrated examples of Figures 2 to 3 and 5 to 6 all of the vertices of the food package have associated cold corner zones. This may be advantageous where the food package is a tetrahedron or similar symmetrical shape which can be stably placed in different orientations so that any of the vertices could be placed uppermost. In other examples only some, or one, of the vertices may be associated with a cold corner zone. In the example of Figures 7 to 8 two cold corner zones 215a and 215c are formed at the ends of seam 213a. In the examples of Figures 9 to 10 and 11 to 12 only one cold corner zone, 315a and 415a respectively, is formed at the upper vertex 314a, 414a. In such examples it may be advantageous to arrange the food package and contents so that they will only stably stand in an orientation where a vertex associated with a cold corner zone is uppermost and/or to include markings on the food package identifying the cold corner zone and/or identifying the correct orientation of the food package for cooking with a vertex associated with a cold corner zone uppermost.

In the illustrated example the joins comprise projecting tabs or flanges. These projecting tabs or flanges provide an increased joint surface to increase the strength and integrity of the join. In some examples the projecting tabs or flanges may not be present, or their size may be different from the illustrated example.

In the illustrated example the tetrahedral food package is formed from a single sheet with four folded edges and two edges formed by sealed joins. In other examples the tetrahedral package may be formed from a greater number of sheets. In other examples the joins may not run along the edges of the package. In the illustrated example the food package is in the form of a tetrahedron. In other examples differently shaped food packages may be used. In general, the food package may be any conical or convex polyhedron shape. In some examples the food package may be a conical or pyramidical shape having an upper vertex when standing on a supporting surface.

Whilst the present invention finds particularly advantageous application with frozen food products, it can also be applied to non-frozen food products, as will be appreciated by the person skilled in the art. Where the invention is used with frozen food products, these may be thawed before cooking or cooked from frozen. Examples of food products which may be used in the invention include, but are not limited to, rice, pasta in sauce, and vegetables in sauce.

The above description relates to an exemplary embodiment of the invention. The skilled person will be able to envisage alternatives within the scope of the present invention as set out in the appended claims.

## Claims

1. A method of producing a package comprising:
forming a hollow body having at least one vertex from sheet material;
forming at least one join by attaching together edges of the sheet material, the at least one join being adjacent to the at least one vertex; and
attaching the sheet material together in a region adjacent the join and the at least one vertex to form a grasping area;
said forming the at least one join and said attaching to form the grasping area being carried out in a single operation by applying heat, applying pressure, or applying both heat and pressure to the sheet material using seal jaws.

2. The method of claim 1, wherein:
the hollow body has two vertices adjacent the join; and
the sheet material is attached together in two regions, each of said regions being adjacent to the join and a respective one of the vertices, to form two grasping areas.

3. The method of either of claims 1 or 2, wherein:
the hollow body has a plurality of vertices, each vertex being adjacent to at least one of the at least one joins; and
the sheet material is attached together in a plurality of regions, each of said plurality of regions being adjacent to one of the at least one joins and a respective one of the plurality of vertices, to form a plurality of grasping areas;
the sheet material optionally being attached together to form a grasping area adjacent each vertex of the hollow body.

4. The method of any preceding claim, wherein the hollow body is formed from a single sheet of sheet material.

5. The method of any preceding claim, wherein the hollow body comprises a convex polyhedron, the convex polyhedron optionally being a pyramid, the pyramid optionally being a tetrahedron.

6. The method of any preceding claim, performed by a vertical form fill sealing machine.

7. A package produced according to the method of any preceding claim.

8. A pair of seal jaws adapted to attach together sheet material placed between the pair of seal jaws, and comprising:
a first seal jaw and a second seal jaw;
each of the first and second seal jaws comprising:
at least one flat sealing area having an edge; and
at least one attachment area extending outwardly from the edge of the sealing area; and
the first and second seal jaws being arranged so that the at least one flat sealing areas of the first and second seal jaws are opposed and the at least one attachment areas of the first and second seal jaws are opposed;
the seal jaws being arranged such that, when the opposed at least one flat sealing areas of the first and second seal jaws attach together edges of sheet material to form a join, the opposed at least one attachment areas of the first and second seal jaws attach the sheet material together in a region adjacent the join to form a grasping area.

9. The pair of seal jaws of claim 8, the at least one attachment area being located at a respective end of the edge.

10. The pair of seal jaws of either of claims 8 or 9,
wherein each of the first and second seal jaws comprises first and second spaced apart attachment areas each extending outwardly from the edge of the at least one sealing area; and
the first and second seal jaws are arranged so that the respective first and second attachment areas of the first and second seal jaws are opposed;
the seal jaws being arranged such that, when the opposed at least one flat sealing areas of the first and second seal jaws attach together edges of sheet material to form a join, the opposed first and second attachment areas of the first and second seal jaws seal spaced apart regions adjacent the join to form grasping areas.

11. The pair of seal jaws of any of claims 8 to 10 wherein the first and second seal jaws each comprise first and second jaw elements;
each of the first and second elements of the first and second seal jaws comprising:
a flat sealing area having an edge; and
at least one attachment area extending outwardly from the edge of said sealing area;
the first and second seal jaws being arranged so that:
the at least one flat sealing areas of the first elements of the first and second seal jaws are opposed,
the at least one flat sealing areas of the second elements of the first and second seal jaws are opposed,
the at least one attachment areas of the first elements of the first and second seal jaws are opposed, and
the at least one attachment areas of the second elements of the first and second seal jaws are opposed;
the seal jaws being arranged such that:
when the opposed at least one flat sealing areas of the first elements of the first and second seal jaws attach together edges of sheet material to form a first join,
the opposed at least one flat sealing areas of the second elements of the first and second seal jaws attach together edges of sheet material to form a second join,
the opposed at least one attachment areas of the first elements of the first and second seal jaws attach the sheet material together in a region adjacent the first join to form a first grasping area, and
the opposed at least one attachment areas of the second elements of the first and second seal jaws attach the sheet material together in a region adjacent the second join to form a second grasping area;
the seal jaws further comprising:
a blade having a sharp edge, said blade being arranged to, in use, move between a position intermediate the first and second elements of the first seal jaw and a position intermediate the first and second elements of the second seal jaw during or after formation of the first and second joins such that the sheet material is cut between the first and second joins.

12. The pair of seal jaws of any of claims 8 to 11, wherein the attachment areas comprise protrusions and/or recesses for forming grip-enhancing structures such as ridges or bumps in the region adjacent the join.

13. A vertical form filling sealing machine comprising the pair of seal jaws of any of claim 8 to 12.

14. A method of producing a package according to any of claims 1 to 6, using the pair of seal jaws of any of claims 8 to 12 or the vertical form filling sealing machine of claim 13.

15. The package of claim 7, formed using the pair of seal jaws of any of claims 8 to 12 or the vertical form filling sealing machine of claim 13.
